(19) Europäisches Patentamt
European Patent Office
Office européen des brevets

(11) EP 1 090 220 B1

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(21) Anmeldenummer: **99936392.2**

(22) Anmeldetag: **01.06.1999**

(51) Int Cl.[7]: **F02D 41/14**, F02D 41/02, F02D 41/12

(86) Internationale Anmeldenummer:
**PCT/DE99/01624**

(87) Internationale Veröffentlichungsnummer:
**WO 00/00729 (06.01.2000 Gazette 2000/01)**

(54) **VERFAHREN ZUR REGENERATION EINES NOx-SPEICHERKATALYSATORS FÜR EINE BRENNKRAFTMASCHINE**

METHOD FOR REGENERATING AN NOx STORAGE CATALYST FOR AN INTERNAL COMBUSTION ENGINE

PROCEDE DE REGENERATION D'UN CATALYSEUR ACCUMULATEUR DE NOx D'UN MOTEUR A COMBUSTION INTERNE

(84) Benannte Vertragsstaaten:
**DE FR GB**

(30) Priorität: **26.06.1998 DE 19828609**

(43) Veröffentlichungstag der Anmeldung:
**11.04.2001 Patentblatt 2001/15**

(73) Patentinhaber: **SIEMENS AKTIENGESELLSCHAFT**
**80333 München (DE)**

(72) Erfinder:
- **PFLEGER, Corinna**
**D-93093 Donaustauf (DE)**
- **ZHANG, Hong**
**D-93057 Regensburg (DE)**

(56) Entgegenhaltungen:
**EP-A- 0 814 248**
**GB-A- 2 307 311**
**US-A- 5 323 635**

- **PATENT ABSTRACTS OF JAPAN vol. 1996, no. 01, 31. Januar 1996 (1996-01-31) & JP 07 238851 A (OSAKA GAS CO LTD), 12. September 1995 (1995-09-12)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Regeneration eines NOx-Speicherkatalysators für eine Brennkraftmaschine gemäß dem Oberbegriff des Patentanspruches 1.

Um den Kraftstoffverbrauch von Otto-Brennkraftmaschinen weiter zu reduzieren, kommen Brennkraftmaschinen mit magerer Verbrennung immer häufiger zum Einsatz. Bei Otto-Brennkraftmaschinen mit magerer Verbrennung wird der Luftüberschuß so groß gewählt, wie es die Lastanforderung an die Brennkraftmaschine gestattet. Bei geringer Lastanforderung, z.B. bei geringem Drehmoment oder geringer bzw. fehlender Beschleunigung, kann in einem Schichtlade-Betrieb das Kraftstoff/Luft-Gemisch, mit dem die Brennkraftmaschine betrieben wird, Lambda-Werte von 3 und mehr aufweisen.

Zur Erfüllung der geforderten Abgasemissionsgrenzwerte ist bei solchen Brennkraftmaschinen eine spezielle Abgasnachbehandlung notwendig. Dazu werden NOx-Speicherkatalysatoren verwendet. Diese NOx-Speicherkatalysatoren sind aufgrund ihrer Beschichtung in der Lage, NOx-Verbindungen aus dem Abgas zu absorbieren, die in einer Speicherphase bei magerer Verbrennung entstehen. Während einer Regenerationsphase werden die absorbierten bzw. gespeicherten NOx-Verbindungen unter Zugabe eines Reduktionsmittels in unschädliche Verbindungen umgewandelt. Als Reduktionsmittel für magerbetriebene Otto-Brennkraftmaschinen können CO, $H_2$ und HC (Kohlenwasserstoffe) verwendet werden. Diese werden durch kurzzeitiges Betreiben der Brennkraftmaschine mit einem fetten Gemisch erzeugt und dem NOx-Speicherkatalysator als Abgaskomponenten zur Verfügung gestellt, wodurch die gespeicherten NOx-Verbindungen im Katalysator abgebaut werden.

In der EP 0 560 991 A1 ist ein Absorber-Katalysator-System mit Mager-Mix-Betrieb beschrieben, bei dem die Umschaltung zwischen Magerbetriebsphasen und stöchiometrischen bzw. Anreicherungsbetriebsphasen zu vergleichsweise grob abgeschätzten Zeitpunkten erfolgt. Dabei wird die Brennkraftmaschine möglichst lange im Magerbetrieb gefahren und von einer stöchiometrischen bzw. Anreicherungsbetriebsphase dann wieder auf den Magerbetrieb geschaltet, wenn aufgrund einer entsprechenden Schätzung angenommen wird, daß sich der NOx-Adsorber wieder regeneriert hat.

Aus JP 07 238851 A ist es bekannt, das Signal eines stromabwärts eines Abgaskatalysators angeordneten NOx-Sensors in Abhängigkeit einer als bekannt vorausgesetzten -Gaszusammensetzung im Abgastrakt korrigiert. Diese Korrektur findet bei bestimmten stationären Zuständen der Brennkraftmaschine statt.

Der Erfindung liegt die Aufgabe zugrunde, ein Verfahren zur Regeneration eines im Abgasstrom einer Brennkraftmaschine angeordneten NOx-Speicherkatalysators anzugeben, mit dem der Auslösezeitpunkt für die Regenerationsphase möglichst genau bestimmt werden kann.

Diese Aufgabe wird durch die Merkmale des Hauptanspruches gelöst.

Erfindungsgemäß wird im Betriebsbereich der Schubabschaltung der Brennkraftmaschine das Signal des NOx-Sensors erfasst und aus den einzelnen Meßwerten ein Mittelwert gebildet und dieser als Offsetwert des Sensorsignals gespeichert. In Betriebsbereichen der Brennkraftmaschine außerhalb der Schubabschaltung wird das Signal des NOx-Sensors erfasst und der Offsetwert bei der Weiterverarbeitung des Signals berücksichtigt. Das offset-bereinigte Signal wird mit einem Schwellenwert verglichen. Bei Überschreiten des Schwellenwertes wird eine Regenerationsphase des NOx-Speicherka-talysators eingeleitet.

Vorteilhafte Ausgestaltungen der Erfindung sind in den Unteransprüchen angegeben.

Gemäß einer Weiterbildung des erfindungsgemäßen Verfahrens wird im Betriebsbereich der Schubabschaltung die in einen Ansaugtrakt der Brennkraftmaschine einströmende Luftmasse aufsummiert und die Ermittlung des Offsetwertes erst freigegeben, wenn diese Luftmassensummme einen Schwellenwert überschreitet. Damit ist sichergestellt, daß der NOx-Speicherkatalysator ausreichend mit Frischluft gespült ist und kein NOx aus der zuletzt stattgefundenen Verbrennung mehr im Abgas vorhanden ist, das die Adaption des Offsets des Sensorsignals verfälschen kann.

Die Erfindung wird nachfolgend anhand eines Ausführungsbeispieles unter Bezugnahme auf die Zeichnung näher erläutert. Die Zeichnung zeigt:

Fig. 1 ein Blockschaltbild einer Brennkraftmaschine mit einem NOX-Speicherkatalysator,
Fig. 2 ein Blockschaltbild zur Freigabe der Offset-Adaption des NOx-Sensorsignals,
Fig. 3 ein Blockschaltbild zur Ermittlung des Offsets des NOx-Sensorsignals und
Fig. 4 ein Blockschaltbild zur Auslösung der Regenerierungsphase für den NOxSpeicherkatalysator

Das erfindungsgemäße Verfahren dient zum Betreiben und Regenerieren des Abgasnachbehandlungssystems einer zumindest in bestimmten Betriebsphasen mit Luftüberschuß arbeitenden Brennkraftmaschine, wie sie schematisch in Fig. 1 dargestellt ist. Dabei sind nur diejenigen Teile und Komponenten in der Figur gezeigt, die für das Verständnis der Erfindung notwendig sind.

Die Brennkraftmaschine 10 weist einen Ansaugtrakt 11 und einen Abgastrakt 12 auf. Im Ansaugtrakt 11 ist ein zur Erfassung der zur Verbrennung in die Zylinder der Brennkraftmaschine 10 einströmenden Luftmasse ein Luftmassenmesser 13 angeordnet. Im Abgastrakt 12 der Brennkraftmaschine 10 befindet sich ein NOx-Speicherkatalysator 14. Stromab dieses NOx-Speicherkatalysators ist ein Meßaufnehmer 15 in Form eines NOx-Sensors vorgesehen. Die Signale MAF des Luftmassenmessers 13 und NOx_AV des NOx-Sensors 14 werden einer Steuerungseinrichtung 16 zugeführt.

Weitere Eingangssignale und Steuerparameter, die zum gesteuerten bzw. geregelten Betrieb der Brennkraftmaschine 10 benötigt werden, wie beispielsweise Gaspedalstellung, Temperatur der Ansaugluft, Drosselklappenstellung, Signale von Klopfsensoren, Batteriespannung, Fahrdynamikanforderungen usw. sind ebenfalls der Steuerungseinrichtung 16 zugeführt und sind in der Figur 1 allgemein mit dem Bezugszeichen 17 gekennzeichnet. Mit Hilfe dieser Steuerparameter wird in der Steuerungseinrichtung 16 durch Abarbeiten abgelegter Steuerroutinen die Brennkraftmaschine gesteuert bzw. geregelt. Hierzu werden über Signale verschiedene Stellgeräte angesteuert, die jeweils einen Stellantrieb und ein Stellglied umfassen, zB. die Drosselklappe und die Einspritzventile. Diese Signale sind in der Figur 1 allgemein mit dem Bezugszeichen 18 gekennzeichnet. Desweiteren weist die Steuerungseinrichtung 16 einen Speicher 19 auf, in dem u.a. ein Kennfeld KF abgelegt ist, dessen Bedeutung anhand der Beschreibung der Figuren 2 bis 4 noch näher erläutert wird.

Im Betrieb steuert die Steuerungseinrichtung 16 die Brennkraftmaschine 10 wahlweise im Magerbetrieb, d. h. mit einem Soll-Lambdawert größer als eins oder im stöchiometrischen bzw. im Anreicherungsbetrieb, d.h. mit einem Lambdawert gleich oder kleiner als eins, an. Nach einer gewissen Zeitdauer des Magerbetriebs muß der NOx-Speicherkatalysator 14 regeneriert werden. Dies erfolgt dadurch, daß zu einem geeigneten Zeitpunkt, der beispielsweise unter Verwendung einer Schätzung, Berechnung oder Messung hinsichtlich der im NOx-Speicherkatalysator eingelagerten Stickoxidmenge festgelegt ist, auf Anreicherungsbetrieb umgeschaltet wird. Eine Regenerierungsphase kann auch eingeleitet werden, wenn die Steuerungseinrichtung 16 feststellt, daß die in den NOx-Speicherkatalysator 14 eingebrachte Menge an NOx einen vorgegebenen Schwellenwert erreicht oder überschreitet. Die Menge an NOx kann dabei aus einem Modell in Abhängigkeit von Betriebskenngrößen der Brennkraftmaschine 1 berechnet werden. Als Betriebskenngrößen können die Drehzahl, Last (Luftmasse, Einspritzmenge), Zündwinkel, Lambdawert des Abgases stromaufwärts des NOx-Speicherkatalysators, Ansauglufttemperatur, Ventilüberschneidung, Abgasrückführung usw. Verwendung finden. Aus dem Modell ist somit zu jedem Zeitpunkt der Speicherphase die im NOx-Speicherkatalysator 3 gespeicherte Menge an NOx bekannt.

Außerdem ist es möglich, durch Erfassen und Auswerten des Ausgangssignals des NOx-Sensors 15 eine Regenerierungsphase einzuleiten. Bedingt durch Bauteiletoleranzen weist das Signal des NOx-Sensors 15 einen spezifischen Offset auf, durch den das Meßergebnis verfälscht wird. Um eine Regeneration des NOx-Speicherkatalyastors 14 mit genügender Genauigkeit und hohem Wirkungsgrad durchzuführen, wird dieser Sensor-Offset bei der Bestimmung des Auslösezeitpunktes der Regenerierungsphase berücksichtigt.

Anhand der nachfolgenden Beschreibung der Figuren 2 bis 4 wird erläutert, wie der Sensor-Offset des NOx-Sensors in bestimmten Betriebsbereichen der Brennkraftmaschine 10 ermittelt, adaptiert und das vom Offset bereinigte Sensorsignal zur Auslösung einer Regenerierungsphase herangezogen werden kann.

In Figur 2 ist schematisch in Form eines Blockschaltbildes gezeigt, unter welchen Bedingungen die Freigabe der Offset-Adaption des NOx-Sensorsignals erfolgt. Die in die Zylinder der Brennkraftmaschine 10 strömende Luftmasse MAF wird durch den Luftmassenmesser 13 erfasst und einem Block 20 zugeführt, der die einzelnen Werte für die Luftmasse aufsummiert, beispielsweise integriert.

Dieses so erhaltene Luftmassenintegral wird einem Block 21 zugeführt, der eine Vergleichseinrichtung enthält, die diesen Wert mit einem vorgegebenen Schwellenwert MAF_SW für die aufsummierte Luftmasse vergleicht. Der Schwellenwert MAF_SW wird entweder durch Prüfstandsversuche oder im Fahrbetrieb ermittelt und ist in dem Speicher 19 der Steuerungseinrichtung abgelegt. Liegt der Wert des Luftmassenintegrals oberhalb des Schwellenwertes MAF_SW, so liegt am Ausgang des Blockes 21 eine logische Variable LV_MAF an, die an den Eingang einer UND-Verknüpfungseinrichtung 22 geführt ist. An dem weiteren Eingang der UND-Verknüpfungseinrichtung 22 ist eine logische Variable LV_SA geführt, die angibt, daß ein Schubabschaltbetrieb der Brennkraftmaschine 10 vorliegt. In diesem Betriebszustand der Schubabschaltung ist die Kraftstoffeinspritzung unterbunden, es kann folglich keine Verbrennung im Zylinder stattfinden und somit auch kein NOx im Abgas erzeugt werden.

Sind beide Bedingungen erfüllt, d.h. befindet sich die Brennkraftmaschine im Betriebszustand der Schubabschaltung und liegt der Wert des Luftmassenintegrals oberhalb des Schwellenwertes, so wird davon ausgegangen, daß der NOx-Speicherkatalysator 14 und der Abgastrakt 12 mit Frischluft ausreichend gespült ist. Am Ausgang der UND-Verknüpfungseinrichtung 22 liegt in diesem Falle eine logische Variable LV_AD zur Freigabe der Adaption des NOx-Sensorsignals an.

In Figur 3 ist gezeigt, wie bei Freigabe der Adaption im Betriebszustand der Schubabschaltung der Offset NOx_OFFSET des NOx-Sensorsignals ermittelt wird. Die aktuellen Werte des vom NOx-Sensor 15 erfassten Signals werden in einem vorgegebenen Zeitraster von der Steuerungseinrichtung 16 eingelesen und in einem Block 23 aufsummiert. Die so erhaltene Summe NOx_SUM_AV wird einem Block 24 zugeführt, der diese Summe durch die Anzahl der Messungen n dividiert. Der auf diese Weise gemittelte Wert stellt den Sensor-Offset NOx_OFFSET dar und wird in dem Speicher 19 der Steuerungseinrichtung 16 gespeichert, indem der darin abgelegte alte Adaptionswert überschrieben wird.

Der Wert für den Sensor-Offset NOx_OFFSET kann neben der erwähnten Mittelwertbildung über eine Anzahl von Messungen auch über eine gleitende Mittelwertbildung nach folgender Gleichung erhalten werden:

$$NOx_GMW_i = NOx_GMW_{i-1} * (1 - MITKO) + MITKO * NOx_i,$$

wobei mit

$NOx_GMW_i$ der neue Mittelwert,
$NOx_GMW_{i-1}$ der Mittelwert aus der vorangegangenen Berechnung,
MITKO eine Mittelungskonstante mit einem Wertebereich zwischen 0 und 1 und
$NOx_i$ der aktuelle Meßwert des NOx-Sensors bezeichnet ist.

Zur Realisierung einer solchen gleitenden Mittelwertbildung kann z.B. ein Tiefpaßfilter (PT1-Glied) verwendet werden. Die Offsetadaption kann darüberhinaus auch durch eine Minimalwertsuche ausgeführt werden. Dazu wird nach Freigabe der Offset-Adaption der kleinste auftretende Sensor-Signalwert abgespeichert.

Der Adaptionsvorgang wird jedesmal während des Schubabschaltbetriebes der Brennkraftmaschine ausgeführt, sofern auch die Adaptionsbedingung (Luftmassenintegral größer als der vorgegebene Schwellenwert) erfüllt ist.

In Figur 4 ist dargestellt, wie das Signal des NOX-Sensors 15 zur Auslösung einer Regenerierungsphase für den NOx-Speicherkatalysator 14 ausgewertet wird. Der Luftmassenstrom MAF im Ansaugtrakt 11 wird vom Luftmassenmesser 13 erfasst und dient als Eingangsgröße für ein Kennfeld KF, das in dem Speicher 19 der Steuerungseinrichtung 16 gespeichert ist. In dem Kennfeld KF sind abhängig vom Luftmassenstrom Schwellenwerte für eine maximale NOx-Konzentration NOx_SENS_MAX in der Einheit ppm abgelegt. Dieser ausgelesene Schwellenwert wird an einen ersten Eingang eines Blockes 25 gelegt, der eine Vergleichseinrichtung enthält.

Von dem vom NOx-Sensor 15 während des gefeuerten Betriebes der Brennkraftmaschine erfassten Signals NOX_AV wird an einer Summationsstelle 26 der Offset NOX_OFFSET, wie er anhand des oben beschriebenen Verfahrens erhalten wurde, abgezogen. Das vom Offset bereinigte Signal wird an den weiteren Eingang des Blockes 25 geführt. Überschreitet dieses Signal den luftmassenstromabhängigen Schwellenwert NOx_SENS_MAX, so liegt am Ausgang des Blockes 25 eine logische Variable LV_REG zur Einleitung einer Regenerationsphase an.

Die Blöcke 20,21,22,23,24,25 und 26 sind in diesem Ausführungsbeispiel als einzelne Komponenten dargestellt, sie können aber auch als Programmroutinen in der Steuerungseinrichtung 16 realisiert sein.

## Patentansprüche

1. Verfahren zur Regeneration eines im Abgasstrom einer zumindest in bestimmten Betriebsbereichen mit Luftüberschuß arbeitenden Brennkraftmaschine angeordneten NOx-Speicherkatalysators, der in einer Speicherphase das im Abgas der Brennkraftmaschine enthaltene NOx speichert und bei Erreichen einer vorbestimmten Beladung zur Entleerung des NOx-Speicherkatalysators gespeichertes NOx in einer Regenerationsphase durch Zugabe eines Reduktionsmittels katalytisch umwandelt, wozu das Signal eines stromabwärts des NOx-Speicherkatalysators angeordneten NOx-Sensors ausgewertet wird, **dadurch gekennzeichnet, daß**

   - im Betriebsbereich der Schubabschaltung der Brennkraftmaschine das Signal (NOx_Av) des NOx-Sensors (15) erfasst wird,
   - aus den einzelnen Meßwerten ein Mittelwert oder ein Minimalwert gebildet und dieser als Offsetwert (NOx_OFFSET) des Sensorsignals gespeichert wird,
   - in Betriebsbereichen der Brennkraftmaschine außerhalb der Schubabschaltung das Signal (NOx_Av) des NOx-Sensors (15) erfasst und der Offsetwert (NOx_OFFSET) bei der Weiterverarbeitung des Signals (NOx_Av) berücksichtigt wird,
   - das offset-bereinigte Signal (NOx_Av - NOx_OFFSET) mit einem Schwellenwert (NOX_SENS_MAX) verglichen wird und
   - bei Überschreiten des Schwellenwertes (NOX_SENS_MAX) eine Regenerationsphase des NOx-Speicherkatalysators (14) eingeleitet wird.

2. Verfahren nach Anspruch 1, **dadurch gekennzeichnet, daß** im Betriebsbereich der Schubabschaltung die während einer vorbestimmten Zeitspanne in einen Ansaugtrakt (11) der Brennkraftmaschine (10) einströmende Luftmasse aufsummiert wird und die Ermittlung des Offsetwertes (NOx_OFFSET) erst freigegeben wird, wenn diese Luftmassensummme einen Schwellenwert (MAF_SW) überschreitet.

**3.** Verfahren nach Anspruch 1, **dadurch gekennzeichnet, daß** der Offsetwert (NOx_OFFSET) durch eine arithmetische Mittelwertbildung der einzelnen Meßwerte (NOx-AV) ermittelt wird.

**4.** Verfahren nach Anspruch 1, **dadurch gekennzeichnet, daß** der Offsetwert (NOx_OFFSET) durch eine gleitende Mittelwertbildung der einzelnen Meßwerte (NOx-AV) ermittelt wird.

**5.** Verfahren nach Anspruch 1, **dadurch gekennzeichnet, daß** der Schwellenwert (NOX_SENS_MAX) zur Einleitung der Regenerationsphase abhängig vom Luftmassenstrom im Ansaugtrakt festgelegt ist.

**6.** Verfahren nach Anspruch 5, **dadurch gekennzeichnet, daß** der Schwellenwert (NOX_SENS_MAX) in einem Kennfeld (KF) eines Speichers (19) einer zur Steuerung der Brennkraftmaschine (10) dienenden Steuerungseinrichtung (16) abgelegt ist.

## Claims

**1.** Method for regenerating an NOx storage catalyst which is arranged in the exhaust gas stream of an internal combustion engine, operating with air excess, at least in certain operating ranges, which in a storage phase stores the NOx contained in the exhaust gas of the internal combustion engine and which, when a predetermined loading is reached, catalytically converts stored NOx in a regeneration phase, for emptying the NOx storage catalyst, by adding a reducing agent, for which purpose the signal of an NOx sensor arranged downstream of the NOx storage catalyst is evaluated, **characterized in that**

- the signal (NOx_AV) of the NOx sensor (15) is detected in the operating range of the overrun fuel cut-off of the internal combustion engine,
- an average value or a minimum value is formed from the individual measured values and this average value is stored as an offset value (NOx_OFFSET) of the sensor signal,
- in operating ranges of the internal combustion engine beyond the overrun fuel cut-off, the signal (NOx_AV) of the NOx sensor (15) is detected and the offset value (NOx_OFFSET) is taken into account when the signal (NOx_AV) is processed further,
- the offset-corrected signal (NOx_AV - NOx_OFFSET) is compared with a threshold value (NOx_SENS_MAX) and
- in the event that the threshold value (NOx_SENS_MAX) is exceeded, a regeneration phase of the NOx storage catalyst (14) is initiated.

**2.** Method according to Claim 1, **characterized in that**, in the operating range of the overrun fuel cut-off, the air mass flowing into an intake tract (11) of the internal combustion engine (10) during a predetermined time period is summated and the determination of the offset value (NOx_OFFSET) is enabled only when this air-mass sum exceeds a threshold value (MAF_SW).

**3.** Method according to Claim 1, **characterized in that** the offset value (NOx_OFFSET) is determined by an arithmetic averaging of the individual measured values (NOx_AV).

**4.** Method according to Claim 1, **characterized in that** the offset value (NOx_OFFSET) is determined by a sliding averaging of the individual measured values (NOx_AV).

**5.** Method according to Claim 1, **characterized in that** the threshold value (NOx_SENS_MAX) for initiating the regeneration phase is fixed as a function of the air mass stream in the intake tract.

**6.** Method according to Claim 5, **characterized in that** the threshold value (NOx_SENS_MAX) is stored in a characteristic map (KF) of a memory (19) of a control device (16) serving for controlling the internal combustion engine (10).

## Revendications

1. Procédé de régénération d'un catalyseur accumulateur de NOx disposé dans le flux de gaz d'échappement d'un moteur à combustion interne fonctionnant avec un excès d'air au moins dans des plages de fonctionnement déterminées, catalyseur qui, lors d'une phase en accumulateur, accumule le NOx contenu dans les gaz d'échappement du moteur à combustion interne et qui, lors de l'atteinte d'un niveau de charge prédéterminé, afin de purger le catalyseur accumulateur de NOx, dans une phase de régénération, convertit par voie catalytique le NOx accumulé, par addition d'un réducteur, ce pourquoi le signal d'un capteur de NOx installé en aval du catalyseur accumulateur de NOx est exploité, **caractérisé en ce que**

    - dans la plage de fonctionnement de coupure sur la lancée du moteur à combustion interne, le signal (NOx_Av) du capteur de NOx (15) est acquis,
    - à partir des différentes valeurs de mesure, une valeur moyenne ou bien une valeur minimale est formée et celle-ci est mémorisée en tant que valeur d'offset (NOx_OFFSET) du signal de capteur,
    - dans les plages de fonctionnement du moteur à combustion interne situées hors de la coupure sur la lancée, le signal (NOx_Av) du capteur de NOx (15) est acquis et la valeur d'offset (NOx_OFFSET) est prise en compte lors du traitement du signal (NOx_Av),
    - le signal débarrassé de l'offset, (NOx_Av - NOx_OFFSET), est comparé à une valeur de seuil (NOx_SENS_MAX), et
    - en cas de dépassement de la valeur de seuil (NOx_SENS_MAX), une phase de regénération du catalyseur accumulateur NOx (14) est lancée.

2. Procédé selon la revendication 1, **caractérisé en ce que**, dans la plage de fonctionnement de coupure sur la lancée, la masse d'air, s'écoulant pendant un intervalle de temps prédéterminé dans un collecteur d'admission (11) du moteur à combustion interne (10), est sommée et la détermination de la valeur d'offset (NOx_OFFSET) n'est lancée que lorsque cette somme des masses d'air dépasse une valeur de seuil (MAF_SW).

3. Procédé selon la revendication 1, **caractérisé en ce que** la valeur d'offset (NOx_OFFSET) est déterminée par une formation de valeur moyenne arithmétique des différentes valeurs de mesure (NOX_AV).

4. Procédé selon la revendication 1, **caractérisé en ce que** la valeur d'offset (NOx_OFFSET) est déterminée par une formation de moyenne glissante des différentes valeurs de mesure (NOx_AV).

5. Procédé selon la revendication 1, **caractérisé en ce que** la valeur de seuil (NOx_SENS_MAX) servant à lancer la phase de régénération est fixée en fonction du débit-masse d'air dans le collecteur d'admission.

6. Procédé selon la revendication 5, **caractérisé en ce que** la valeur de seuil (NOx_SENS_MAX) est stockée dans un champ de caractéristiques (KF) d'une mémoire (19) d'un dispositif de commande (16) servant à commander le moteur à combustion interne (10).

FIG 1

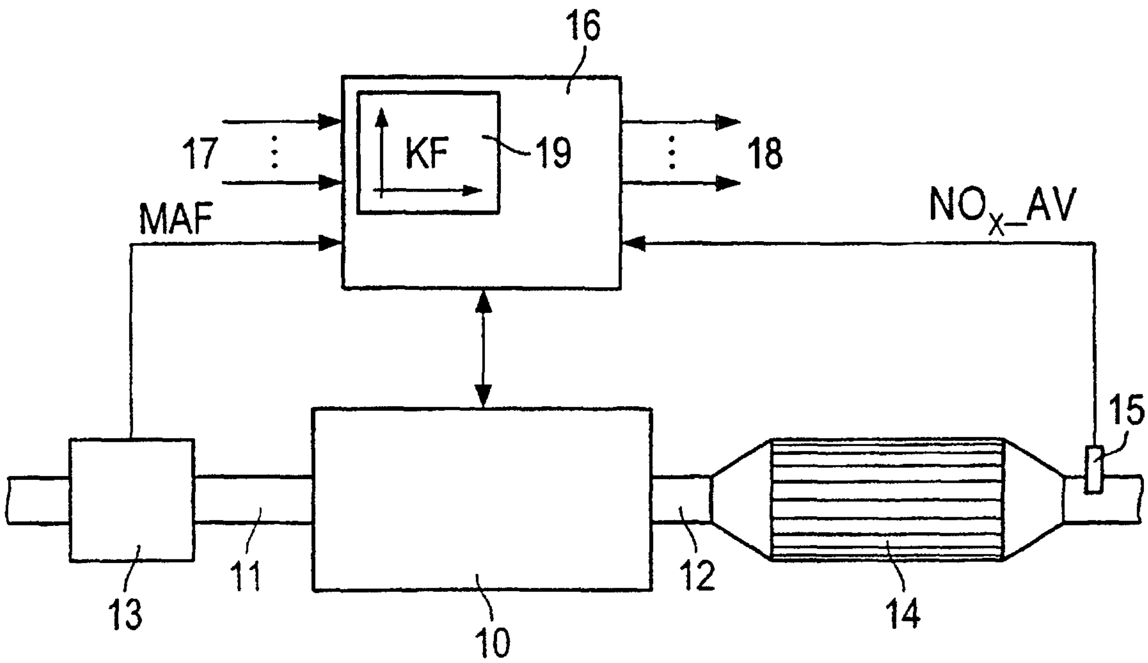
16
17
KF
19
18
MAF
$NO_X$_AV
15
13
11
10
12
14

FIG 2

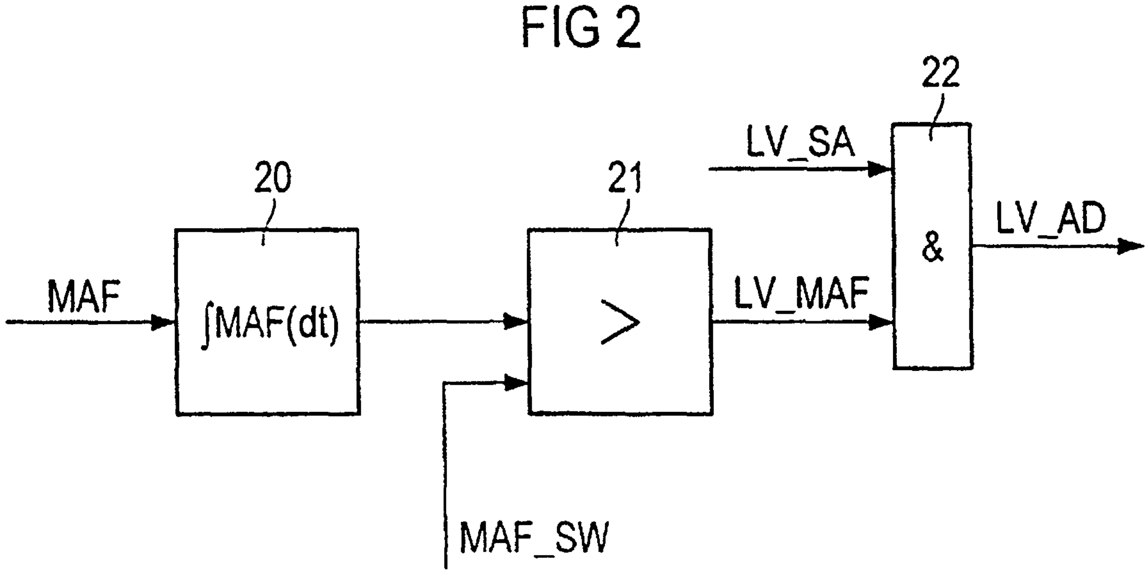
22
LV_SA
20
21
LV_AD
&
MAF
∫MAF(dt)
>
LV_MAF
MAF_SW

FIG 3

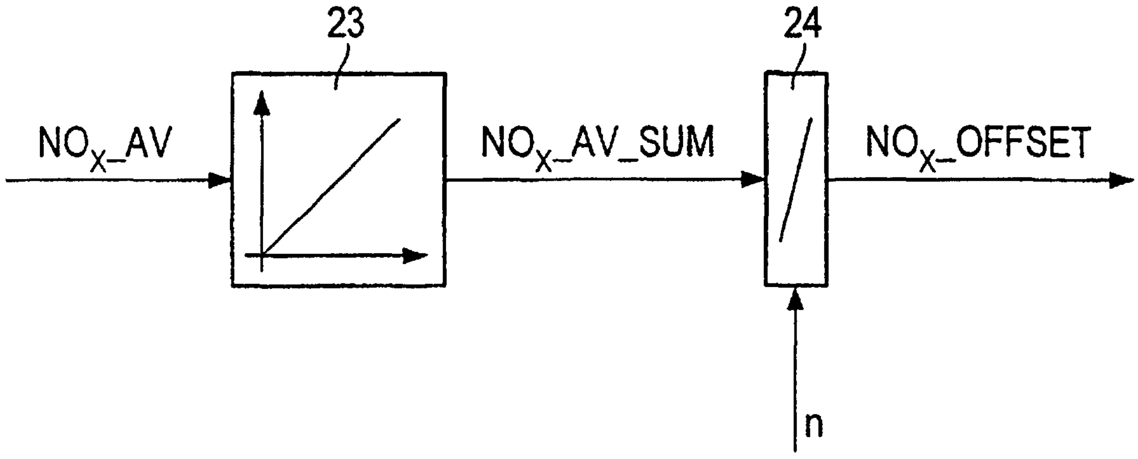
23
24
$NO_X$_AV
$NO_X$_AV_SUM
$NO_X$_OFFSET
n

FIG 4

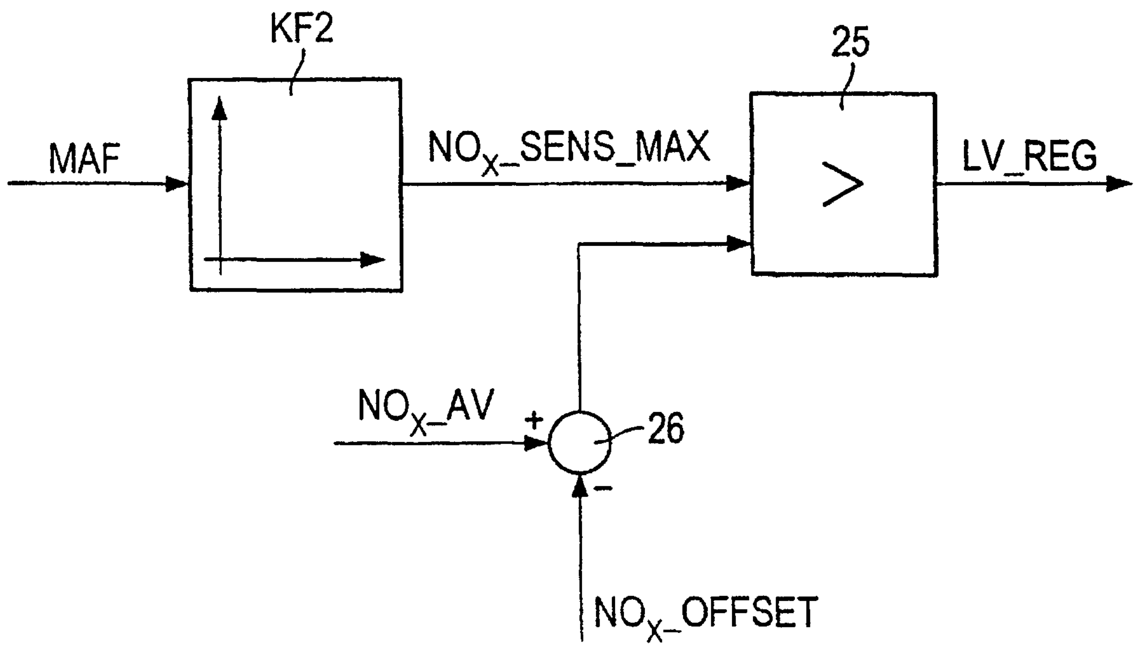
KF2
25
MAF
$NO_X$_SENS_MAX
>
LV_REG
$NO_X$_AV
+
26
−
$NO_X$_OFFSET